# EUROPÄISCHE PATENTANMELDUNG

(11) **EP 4 410 856 A1**
(43) Veröffentlichungstag der Anmeldung: **07.08.2024**
(21) Anmeldenummer: 23154150.9
(22) Anmeldetag: 31.01.2023
(51) Int. Cl.: C08G 18/00, C08L 43/02, C08L 75/04, C07F 9/48

(54) **ISOCYANAT-REAKTIVE UND ISOCYANAT-TERMINIERTE PHOSPHANYLCARBOXAMIDE SOWIE DEREN HERSTELLUNG UND VERWENDUNG ZUR HERSTELLUNG VON PHOSPHORHALTIGEN POLYURETHANEN UND POLYISOCYANURATEN**

(71) Anmelder: Covestro Deutschland AG, 51373 Leverkusen (DE); Technische Universität Dresden, Körperschaft des öffentlichen Rechts, 01069 Dresden (DE)
(72) Erfinder: Yogendra, Sivathmeehan, 40211 Düsseldorf (DE); Albach, Rolf, 51061 Köln (DE); Boehnke, Lutz, 51491 Overath (DE); Richter, Frank, 51373 Leverkusen (DE); Weigand, Jan, 01069 Dresden (DE); Schwedtmann, Kai, 01069 Dresden (DE); Haberstroh, Jan, 01069 Dresden (DE)
(74) Vertreter: Levpat

(57) **Zusammenfassung**

Die vorliegende Erfindung betrifft Isocyanat- reaktive und Isocyanat-terminierte Phosphanylcarboxamide als neuartige Monomere und Prepolymere zur Herstellung von Kunststoffen, die beispielsweise zur Herstellung von Polyurethanen oder Polyurethan- /Polyisocyanurat-Polymeren verwendet werden können.

## Beschreibung

Die vorliegende Erfindung betrifft neuartige Monomere und Prepolymere zur Herstellung von Kunststoffen, die beispielsweise zur Herstellung von flammgeschützten Polyurethanen oder Polyurethan-/Polyisocyanurat-Polymeren (im Folgenden einzeln oder gemeinsam mit PUR/PIR bezeichnet) verwendet werden können.

Viele Kunststoffe sind, wie die meisten organischen Substanzen, gut brennbar. Für eine große Zahl von Anwendungen ist es daher notwendig sie mit Flammschutzmitteln auszurüsten. Dies gilt auch für PUR/PIR - Polymere, insbesondere solche, welche im Bausektor oder in bestimmten Beschichtungen eingesetzt werden. Häufig werden PUR/PIR-Schaumstoffe als Isolationsmaterialien eingesetzt und die Anwendung als Schaumstoff allgemein verstärkt durch die große Oberfläche pro Masseneinheit das Brandrisiko zusätzlich. In vielen Einsatzgebieten von PUR/PIR-Schaumstoffen ist daher eine Brandschutzausrüstung durch zugesetzte Flammschutzmittel unerlässlich.

Als Flammschutzmittel werden bevorzugt halogenhaltige Verbindungen sowie Stickstoff- und Phosphorverbindungen eingesetzt. Verbindungen die Halogene enthalten und niedervalente Phosphorverbindungen gelten als typische Vertreter der Flammschutzmittel, die Flammen ersticken. Höhervalente Phosphorverbindungen sollen eine katalytische Spaltung der Polyurethane bewirken und dadurch zur Bildung einer festen, polyphosphathaltigen, verkohlten Oberfläche führen. Diese Intumeszenzschicht schützt das Material vor weiterer Verbrennung.

Niedermolekulare Flammschutzmitteladditive wie z.B. Tris(2-chlorisopropyl)phosphat (TCPP) oder Triethylphosphat (TEP) liegen chemisch ungebunden in der Polymermatrix vor, können als Weichmacher das Produkt beeinflussen und mit der Zeit auslaugen.

Eine interessante Alternative zu phosphorhaltigen Flammschutzmitteladditiven ist die Verwendung phosphorhaltiger, reaktiver Bausteine wie Monomere und Prepolymere für die Herstellung von inhärent flammgeschützten Polymeren. Beispielsweise können hydroxy-terminierte organische Phosphonate bzw. Phosphate, welche unter anderem unter dem Handelsnamen Exolit^{®} OP560 oder Nofia^{®} OL1000 erhältlich sind, für die Herstellung von Phosphor-enthaltenden Polyurethanen und Polyurethan/Polyisocyanuraten verwendet werden. Die Phosphonat- bzw. Phosphat-haltigen Monomere bzw. Prepolymere werden dabei in das Polyurethan über eine Polyaddition eingebaut, wodurch die Polyurethan-charakteristische Struktur und damit die Eigenschaften der Polyurethane beeinflusst werden.

Die steigenden Anforderungen an die Sicherheit, die Kosten und die Nachhaltigkeit von organischen Polymeren allgemein und PUR/PIR im Besonderen erfordern daher die Entwicklung neuer Flammschutzmittel.

Eine bisher noch nicht kommerziell verwendete organische phosphorhaltige Verbindungsklasse sind Phosphanylcarboxamide (Abbildung 1, I) und Phosphor(III)säurecarboxamide (Abbildung 1, II). Die Gruppen zeigen eine starke Strukturanalogie zu den in Polyurethanen und Polyisocyanurat enthaltenen Harnstoff, Urethan, Biuret und Isocyanurat-Bindungsmotiven. 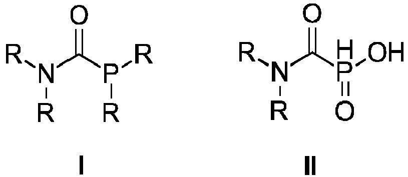 Abbildung 1: allgemeine Strukturen von Phosphanylcarboxamiden **(I)** und Phosphor(III)säurecarboxamiden **(II)**; mit R = unabhängig voneinander ausgewählt aus (gegebenenfalls mit Heteroatomen substituierten) Organylresten und Wasserstoffresten

Bestimmte Phosphanylcarboxamide und Phosphor(III)säurecarboxamide mit je einer Phosphanyl- bzw. Phosphor(III)säure- und einer Amidfunktion wie in Abbildung 1 sind bereits bekannt.

Die Herstellung von Verbindungen der Struktur **I** kann aus den entsprechenden Ausgangsverbindungen über bekannte Syntheseverfahren erfolgen. Dazu gehört die direkte Umsetzung von primären bzw. sekundären Phosphanen oder Phosphanoxiden mit monofunktionellen Isocyanaten und Cyanaten (z.B. US 3,116,316 A). Auch die Umsetzung von Phosphanen und Phosphanoxiden mit difunktionellen Isocyanaten zu einer polymeren Struktur wurde beschrieben (US 3,213,042 A). Ebenfalls beschrieben ist die Reaktion von primären Aminen mit dem 1,4-Dioxan-Addukt bestehend aus Na(OCP)(1,4-Dioxan)ₓ mit variierenden 1,4-DioxanGehalt (z.B. x = 2,5). Die Synthese und Isolierung des Na(OCP)(1,4-Dioxan)ₓ gestaltet sich jedoch als umständlich, da mehrere organische Lösungsmittel simultan verwendet werden müssen (DME, 1,4-Dioxan, THF), die verwendeten organischen Lösungsmittel energieintensiv im Vakuum entfernt werden müssen sowie ein zeitintensiver (6-12 h) Filtrationsprozess und Umkristallisationsprozess mit 1,4-Dioxan notwendig ist. Außerdem enthält das so erhaltene 1,4-Dioxan-Addukt Na(OCP)(1,4-Dioxan)ₓ nicht reproduzierbare Mengen an 1,4-Dioxan, so dass der 1,4-Dioxangehalt jeder Produktcharge mittels NMR-Spektroskopie quantifiziert werden muss. Aufgrund dieser Nachteile ist der Syntheseweg über das Addukt bestehend aus Na(OCP)(1,4-Dioxan)ₓ nicht gut geeignet für die Herstellung von größeren Mengen der Verbindungen mit den Strukturen **I** bzw. **II** und ein vereinfachtes Herstellungsverfahren wäre von großem Interesse.

Auch zwei Beispiele bifunktionaler, primärer Bis(phosphanylcarboxamide) der Struktur **III** sind in der Literatur beschrieben (Abbildung 2, Struktur **III**, R = Ethylen und R= 1,2-Cyclohexylen, Y.-H. Wu, Z.-F. Li, W.-P. Wang, X.-C. Wang, Z.-J. Quan, Eur. J. Org. Chem. 2017, 2017, 5546-5553; E. N. Faria, A. R. Jupp, J. M. Goicoechea, Dalton Trans. 2021, 50, 6991-6996.). Bifunktionale Hydroxy(phosphanylcarboxamide) (IV, mit X = OH) und Bis(phosphor(III)säurecarboxamide) (V) sind noch nicht literaturbekannt. 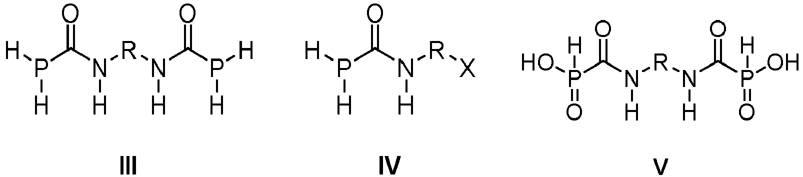 Abbildung 2: Strukturen von Bis(phosphanylcarboxamiden) **(III)**; bifunktionalen Phosphanylcarboxamiden mit X = NCO-reaktive Gruppe (IV) und Bis(phosphor(III)säurecarboxamiden) (V); mit R = unabhängig voneinander ausgewählt aus (gegebenenfalls mit Heteroatomen substituierten) Organylresten

Auch die Verwendung von Phosphanylcarboxamid- oder Phosphor(III)säurecarboxamid-haltigen Strukturen als reaktive, phosphorhaltige Bausteine, z.B. für den Einbau in Polyurethane bzw. Polyisocyanurate, ist bisher nicht offenbart.

Als reaktive monomere Bausteine ("Monomere") für die Herstellung von Kunststoffen, z.B. als Reaktant für die Polyadditionsreaktion mit der NCO-Funktion einer Isocyanatverbindung bei der Polyurethan - oder Polyisocyanuratbildung, sind insbesondere solche Verbindungen interessant, welche erstens über eine oder mehrere Phosphanylcarboxamidstrukturen und / oder Phosphor(III)säurecarboxamidstrukturen verfügen als auch zweitens über mindestens zwei funktionelle Gruppen, die Isocyanat-reaktiv sind ("NCO-reaktive Gruppen"). Diese Verbindungen werden im Folgenden einzeln oder gemeinsam mit **"PCA"** bezeichnet.

Die Erfindung betrifft Verbindungen **PCA** der allgemeinen Struktur **VI** bzw. **VII** (siehe Abbildung 3), welche über mindestens zwei NCO-reaktive Gruppen verfügen und somit als Monomere z.B. für die Polyaddition an Polyisocyanate eingesetzt werden können, mit der Maßgabe, dass die Verbindungen mit der Struktur **III** und R = Ethylen oder R= 1,2-Cyclohexylen ausgeschlossen sind.

Die Erfindung betrifft ebenfalls die Verwendung der **PCA** als Monomere für die Herstellung von phosphorhaltigen Prepolymeren und Polymeren, z.B. PUR/PIR.

Die Erfindung betrifft weiterhin Prepolymere, Polymere und NCO-terminierte Verbindungen, welche unter Verwendung von Verbindungen **PCA** und polyfunktionellen Isocyanaten hergestellt werden können.

Die Erfindung betrifft weiterhin neue Verfahren zur Herstellung der **PCA,** wobei
a) eine Na(OCP)-Reaktionslösung mit einem Amin in Anwesenheit einer Brönsted Säure und optional einem Oxidationsmittel in einer mehrstufigen Synthese umgesetzt werden (Abbildung 4a) oder alternativ
b) roter Phosphor, Natrium, organische Carbonate, tert-Butanol, Amine in Gegenwart einer Brönsted-Säure und optional einem Oxidationsmittel in einer Eintopfreaktion umgesetzt werden (Abbildung 4b).

### Verbindungen PCA

Die neuartigen Verbindungen **PCA** sind ausgewählt aus der Gruppe von organischen Phosphorverbindungen, welche eine Struktur **VI** oder eine Struktur **VII** aufweisen und welche über mindestens zwei Isocyanat-reaktive Gruppen verfügen, mit der Maßgabe, dass Verbindungen der Struktur **III** mit R = Ethylen oder R= 1,2-Cyclohexylen ausgeschlossen sind. 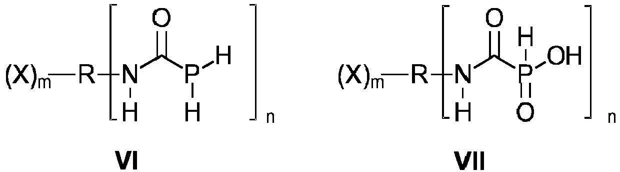 Abbildung 3: Strukturen von Phosphanylcarboxamiden **(VI)** und Phosphor(III)säurecarboxamiden **(VII)**

Bei den Phosphanylcarboxamiden **VI** bzw. Phosphor(III)säurecarboxamiden **VII** bedeutet X eine NCO-reaktive Gruppe, m = 0-3, n = 1-4, m+n ≥ 2; und R ist ein (gegebenenfalls mit Heteroatomen substituierter) Organylrest.

Insbesondere handelt es sich bei den Isocyanat-reaktiven Gruppen der Verbindungen **PCA** um mindestens zwei Gruppen ausgewählt aus der Gruppe bestehend aus -PH₂, -PHR, -P(O)H₂, -P(O)HR, -P(O)(H)OH, -P(OH)H, -P(OH)R (mit R = gegebenenfalls mit Heteroatomen substituierter Organylrest), -OH, -NH₂, -NHR` (mit R' = gegebenenfalls mit Heteroatomen substituierter Organylrest ausgenommen para-substituierter Anilinrest), - SH und Oxiran.

Insbesondere bevorzugt sind Verbindungen **PCA,** welche ausgewählt sind aus der Gruppe der Verbindungen bestehend aus Verbindungen **PCA** mit den Strukturen **VI** und **VII,** und wobei die Organylreste R bevorzugt ausgewählt sind aus der Gruppe bestehend aus Trimethylen, Tetramethylen, Pentamethylen, Hexamethylen, Heptamethylen, Octamethylen, Nonamethylen, Decamethylen, Undecamethylen, Dodecamethylen gegebenenfalls Heteroatom-enthaltende Cyclohexylen, Phenylen, Diphenylen, Dimethylphenylen, 2-Methylpentamethylen, 2,2,4-Trimethylhexamethylen, Dodecamethylen , 1,2-Cyclohexylen, 1,3-Cyclohexylen, 1,4-Cyclohexylen, 5-(1-Methylen-(1,3,3-trimethylcyclohexan)), alle Regioisomere des Methylenbiscyclohexylens, alle Regioisomere des Methylenbisphenylens, Methylenbis-(3,3'-dimethylcyclohexan-1,4-diyl), Propan-2,2-diyl)bis(cyclohexan-4,1-diyl), Propane-2,2-diyl-bis-4,1-phenylen, Polyhexamethylen, Tolylen, Poly(propylenglycol)tolylen, Poly(ethylenadipate)Tolylen, 2,4,6-Trimethyl-1,3-phenylen, 4-Chloro-6-methyl-1,3-phenylen, Poly[1,4-phenylen], co-[Poly(1,4-butanediol)], Poly(tetrafluoroethylenoxid-co-difluoromethylenoxid), 1,3-Bis(1-methylethyl)benzen, 3,3'-Dimethyl-4,4'-biphenylen, Naphthalen, 1,2-Phenylen, 1,3-Phenylen, 1,4-Phenylen, 2,4- oder 2,5- oder 2,6- Tolylen sowie deren Isomerengemische, Methylen-4,4'- oder 2,4'- oder 2,2'-Bisphenylen sowie deren Isomerengemische, 4,4'-, 2,4'- oder 2,2'- 2,2'-Diphenylpropane-p-xylylen und α,α,α',α'-Tetramethyl- m- oder -p-xylylen. Ganz besonders bevorzugt ausgewählt ist der Organylrest R ausgewählt aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische.

Der NCO-reaktive Rest X ist insbesondere ausgewählt aus der Gruppe bestehend aus -PH₂, -PHR', - P(O)H₂, -P(O)HR', -P(O)(H)OH, -OH, -NH₂, -NHR', - NHC(O)PH2, -NHC(O)PHR', - NHC(O)P(O)H2, -NHC(O)P(O)HR', -NHCOOH, -NHC(O)NH2, - NHC(O)NHR' (mit R' = gegebenenfalls mit Heteroatomen substituierter Organylrest).

Besonders bevorzugt sind Verbindungen der Struktur VI bzw. VII dadurch gekennzeichnet, dass
m = 0, 1, n = 1, 2, m+n = 2;
R ausgewählt aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische und
X = OH
sind.

### Herstellungsverfahren der Isocyanat-reaktiven Verbindungen PCA

Die Herstellung der Verbindungen **PCA** kann wie oben beschrieben aus den entsprechenden Ausgangsverbindungen über bekannte Syntheseverfahren erfolgen, welche jedoch insbesondere für die Synthese größerer Mengen nicht gut geeignet sind.

Die Erfindung betrifft weiterhin auch neue Verfahren zur Herstellung der **PCA,** wobei
a) eine Na(OCP)-Reaktionslösung mit einem Amin in Anwesenheit einer Brönsted Säure und optional einem Oxidationsmittel in einer mehrstufigen Synthese umgesetzt werden (Abbildung 4a) oder
b) alternativ können roter Phosphor, Natrium, organische Carbonate, tert-Butanol, Naphthalin, Amine in Gegenwart einer Brönsted-Säure und optional einem Oxidationsmittel in einer Eintopfreaktion umgesetzt werden (Abbildung 4b).
zu a) Die Verbindungen **VI** und **VII** lassen sich mit einem neu entwickelten Verfahren über eine Na(OCP) ("Natriumphosphaethynolat") - Reaktionslösung nach folgendem Reaktionsschema herstellen: 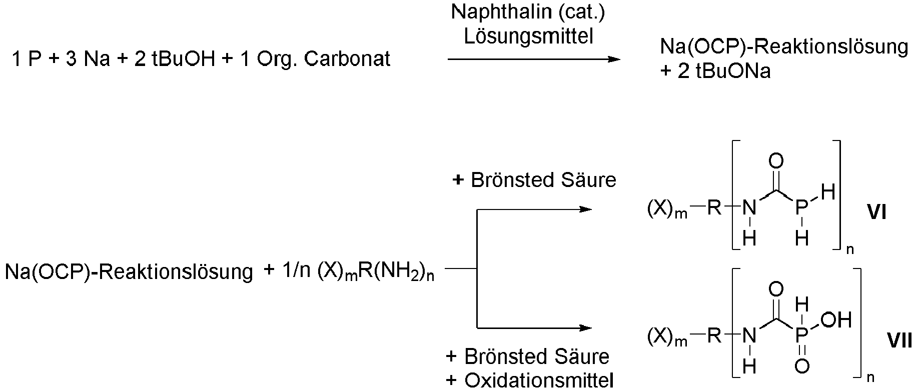 Abbildung 4a: Reaktionsschema zur Herstellung der **PCA VI** und **VII** über eine Na(OCP)-Reaktionslösung.

Die Synthese umfasst folgende Schritte:
(i) ausgehend von elementarem Phosphor, elementarem Natrium, tert-Butanol (tBuOH), Naphthalin und organischen Carbonaten wird in einem Lösungsmittel eine 1,4-Dioxan-freie, lagerstabile Na(OCP)-Reaktionslösung hergestellt (Abbildung 4a). Diese enthält Natrium-tert-Butoxid (tBuONa) und Alkohole als nicht-störende Koppelprodukte. Die Na(OCP)-Reaktionslösung ist durch das tBuONa Koppelprodukt stark basisch, wodurch die Lagerstabilität begünstigt wird. Mehrere Filtrationsschritte sowie Lösungsmittelwechsel sind nicht notwendig. Alternativ kann die Na(OCP)-Reaktionslösung ohne weitere Aufarbeitung direkt weiter umgesetzt werden.

Bevorzugt wird als Lösungsmittel ein Ether verwendet, besonders bevorzugt wird Ethylenglycoldimethylether verwendet. Bevorzugt wird kein Dioxan als Lösungsmittel eingesetzt, wodurch das Na(OCP) in Lösung bleibt und im Gegensatz zu den bisher bekannten Verfahren nicht ausfällt. Die Quantifizierung des OCP-Anion-Gehaltes gelingt während und/oder nach der Umsetzung durch IR-Spektroskopie.
(ii) Im nächsten Schritt wird die Na(OCP)-Reaktionslösung dann mit einem geeigneten Amin (X)ₘ-R-(NH₂)ₙ in Anwesenheit einer geeigneten Brönsted Säure zu **PCA** der Struktur **VI** umgesetzt. Die Brönsted Säure wird im Überschuss zugegeben. Anstelle der Kombination aus Amin (X)ₘ-R-(NH₂)ₙ und Brönsted Säure kann auch das entsprechende Hydrochlorid des Amines eingesetzt werden.
(iii) Bei Einsatz eines zusätzlichen Oxidationsmittels während oder nach Schritt (ii) werden **PCA** der Struktur **VII** erhalten.

Zu b) Alternativ gelingt die Herstellung des PCAs durch die direkte Umsetzung von rotem Phosphor, Natrium, organischen Carbonaten, tert-Butanol, Naphthalin, Aminen, einer Brönsted-Säure und ggf. einem Oxidationsmittel (Abbildung 4b) in einer Eintopfreaktion (Abbildung 4b). 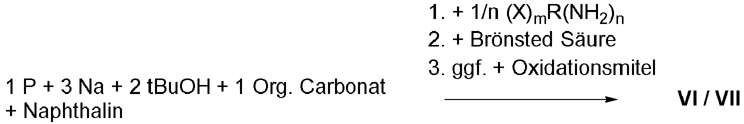 Abbildung 4b: Reaktionsschema zur Herstellung der **PCA VI** und **VII** in einer Eintopfreaktion

Das für die Verfahren a) und b) eingesetzte Amin ist ausgewählt aus der Gruppe von Verbindungen bestehend aus organischen Aminen der Strukturformel (X)ₘ-R-(NH₂)ₙ, wobei der Substituent R ausgewählt ist aus (gegebenenfalls mit Heteroatomen substituierten) Organylresten, bevorzugt aus der Gruppe bestehend aus Trimethylen, Tetramethylen, Pentamethylen, Hexamethylen, Heptamethylen, Octamethylen, Nonamethylen, Decamethylen, Undecamethylen, Dodecamethylen gegebenenfalls Heteroatom-enthaltende Cyclohexylen, Phenylen, Diphenylen, Dimethylphenylen, 2-Methylpentamethylen, 2,2,4-Trimethylhexamethylen, Dodecamethylen, 1,2-Cyclohexylen, 1,3-Cyclohexylen, 1,4-Cyclohexylen, 5-(1-Methylen-(1,3,3-trimethylcyclohexan)), alle Regioisomere des Methylenbiscyclohexylens, alle Regioisomere des Methylenbisphenylens, Methylenbis-(3,3'-dimethylcyclohexan-1,4-diyl), Propan-2,2-diyl)bis(cyclohexan-4,1-diyl), Propane-2,2-diyl-bis-4,1-phenylen, Polyhexamethylen, Tolylen, Poly(propylenglycol)tolylen, Poly(ethylenadipate)Tolylen, 2,4,6-Trimethyl-1,3-phenylen, 4-Chloro-6-methyl-1,3-phenylen, Poly[1,4-phenylen], co-[Poly(1,4-butanediol)], Poly(tetrafluoroethylenoxid-co-difluoromethylenoxid), 1,3-Bis(1-methylethyl)benzen, 3,3'-Dimethyl-4,4'-biphenylen, Naphthalen, 1,2-Phenylen, 1,3-Phenylen, 1,4-Phenylen, 2,4- oder 2,5- oder 2,6- Tolylen sowie deren Isomerengemische, Methylen-4,4'- oder 2,4'- oder 2,2'-Bisphenylen sowie deren Isomerengemische, 4,4'-, 2,4'- oder 2,2'- 2,2'-Diphenylpropane-p-xylylen und α,α,α',α'-Tetramethyl- m- oder -p-xylylen; und R ganz besonders bevorzugt ausgewählt ist aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische;
und wobei X ausgewählt aus -PH₂, -PHR', -P(O)H₂, -P(O)HR', -P(O)(H)OH, -OH, -NH₂, -NHR', - NHC(O)PH₂, -NHC(O)PHR', - NHC(O)P(O)H₂, -NHC(O)P(O)HR', -NHCOOH, -NHC(O)NH₂, - NHC(O)NHR' (mit R' = gegebenenfalls mit Heteroatomen substituierter Organylrest).

Das organische Carbonat (Abbildungen 4a / 4b: "Org. Carbonat") ist bevorzugt ausgewählt aus der Gruppe von Verbindungen bestehend aus Dimethylcarbonat, Diethylcarbonat, Ethylmethylcarbonat, Ethylencarbonat, Propylencarbonat, Glycerincarbonat und Mischungen daraus.

Bei der Brönsted Säure (Abbildungen 4a / 4b: "Brönsted Säure") handelt es sich um eine oder mehrere Säuren, insbesondere ausgewählt aus der Gruppe bestehend aus
- organischen Carbonsäuren, insbesondere um Essigsäure und/oder Ameisensäure,
- Dihydrogencarbonat, Natriumhydrogencarbonat, Phosphorsäure, Natriumdihydrogenphosphat,
- Salzsäure, Schwefelsäure, Natriumhydrogensulfat,
- Ammoniumhydrohalogenide, wobei das Halogenid ausgewählt aus Cl⁻, Br, I⁻ ist, insbesondere Ammoniumchlorid (NH₄)Cl, Triethylammoniumchlorid (Et₃NH)Cl, oder entsprechende Hydrochloride der Amine (X)ₘ-R-(NH₂)ₙ.

Bei dem Oxidationsmittel handelt es sich um ein Sauerstoffübertragungs-Reagenz, das in der Lage ist, Phosphanylcarboxamide **VI** zu Phosphor(III)säurecarboxamiden **VII** umzusetzen. Insbesondere eignen sich hierfür Wasserstoffperoxid (H₂O₂), Sauerstoff (O₂), Ozon (O₃), Peroxyessigsäure, Peroxyschwefelsäure, Lachgas (N₂O), Stickstoffdioxid (NO₂), organische Peroxide, wie z.B. tert-Butylperoxid, Peroxybenzoesäure, Chloroperoxybenzoesäure, Pyridin-N-Oxid. Besonders bevorzugt wird Wasserstoffperoxid (H₂O₂) oder Sauerstoff (O₂) verwendet.

Die Verbindung **PCA** kann nach der Aufarbeitung als Reinstoff erhalten werden. Die Isolierung gelingt beispielweise durch Entfernung aller flüchtigen Bestandteile der Reaktionsmischung im Vakuum, gegebenenfalls schließt sich eine Extraktion des Rückstandes an. Alternativ kann der Rückstand zuvor mit Wasser gewaschen werden.

### Isocyanat-terminierte Verbindungen VIII, IX und X:

Die PCAs können eingesetzt werden zur Herstellung von NCO-terminierten Phosphanylcarboxamiden der Strukturen **VIII, IX** und **X** (Abbildung 5), bzw. deren äquivalenten Verbindungen mit oxidiertem Phosphor. 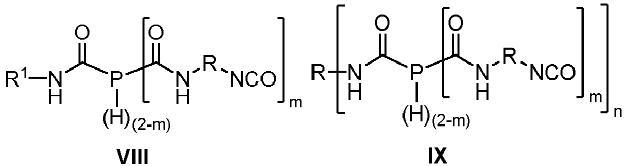 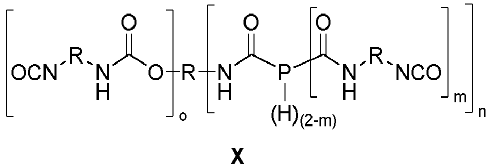 Abbildung 5: NCO-terminierte Phosphanylcarboxamide **VIII, IX** und **X**

Bei den NCO-terminierten Phosphanylcarboxamiden **VIII, IX** und **X** ist
m = 1, 2; n = 2-4; o = 1-3;
der Substitutent R¹ ist ein (gegebenenfalls Heteroatom substituierten) Organylrest, und ausgewählt aus der Gruppe bestehend aus den Substituenten Wasserstoff, Methyl, Ethyl, Butyl, Propyl, Pentyl, Hexyl, Heptyl, Oxtyl, Phenyl, Tolyl, Cyclohexyl und Cyclopentyl,
und die Substituenten R sind unabhängig voneinander ausgewählte (gegebenenfalls mit Heteroatomen substituierte) Organylreste, und sind bevorzugt ausgewählt aus der Gruppe bestehend aus den Substituenten Methylen, Dimethylen, Trimethylen, Tetramethylen, Pentamethylen, Hexamethylen, Heptamethylen, Octamethylen, Nonamethylen, Decamethylen, Undecamethylen, Dodecamethylen gegebenenfalls Heteroatom-enthaltende Cyclohexylen, Phenylen, Diphenylen, Dimethylphenylen, 2-Methylpentamethylen, 2,2,4-Trimethylhexamethylen, Dodecamethylen, 1,2-Cyclohexylen, 1,3-Cyclohexylen, 1,4-Cyclohexylen, 5-(1-Methylen-(1,3,3-trimethylcyclohexan)), alle Regioisomere des Methylenbiscyclohexylens, alle Regioisomere des Methylenbisphenylens, Methylenbis-(3,3'-dimethylcyclohexan-1,4-diyl), Propan-2,2-diyl)bis(cyclohexan-4,1-diyl), Propane-2,2-diyl-bis-4,1-phenylen, Polyhexamethylen, Tolylen, Poly(propylenglycol)tolylen, Poly(ethylenadipate)Tolylen, 2,4,6-Trimethyl-1,3-phenylen, 4-Chloro-6-methyl-1,3-phenylen, Poly[1,4-phenylen], co-[Poly(1,4-butanediol)], Poly(tetrafluoroethylenoxid-co-difluoromethylenoxid), 1,3-Bis(1-methylethyl)benzen, 3,3'-Dimethyl-4,4'-biphenylen, Naphthalen, 1,2-Phenylen, 1,3-Phenylen, 1,4-Phenylen, 2,4- oder 2,5- oder 2,6- Tolylen sowie deren Isomerengemische, Methylen-4,4'- oder 2,4'- oder 2,2'- Bisphenylen sowie deren Isomerengemische, 4,4'-, 2,4'- oder 2,2'- 2,2'-Diphenylpropane-p-xylylen und α,α,α',α'-Tetramethyl- m- oder -p-xylylen; und ganz besonders bevorzugt ausgewählt aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische.

Besonders bevorzugt für den weiteren Einsatz in der Herstellung von Polymeren sind Verbindungen der Strukturen **VIII, IX** und / oder **X** mit m = 2; n = 1, 2; o = 1,
wobei R¹ ausgewählt der Gruppe bestehend aus Wasserstoff, Phenyl und Tolyl,
und wobei R ausgewählt ist aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische.

Bevorzugt besitzen die Isocyanat-terminierten Phosphanylcarboxamide der Formel **VIII, IX** und **X** ein gemitteltes Molekulargewicht ermittelt durch Gelpermeationschromatographie von mindestens 300 g/mol und höchstens 10.000 g/mol, besonders bevorzugt von mindestens 300 g/mol und höchstens 2000 g/mol.

Besonders bevorzugt sind die erfindungsgemäßen Isocyanat-terminierten Phosphanylcarboxamide der Formel **VIII, IX** bzw. **X** flüssig und weisen eine dynamische Viskosität bei 23°C bestimmt mit einem Kegel-Platten Viskosimeter von höchstens 30.000 mPa*s, besonders bevorzugt von höchstens 20.000 mPa*s auf.

### Herstellungsverfahren der Isocyanat-terminierten Phosphanylcarboxamide VIII, IX bzw. X:

Die Phosphanylcarboxamide **VI** bzw. Phosphor(III)säurecarboxamide **VII** können mit einem (molaren) Überschuss mindestens eines Di- oder Polyisocyanats, gegebenenfalls in Anwesenheit eines Katalysators, zu Isocyanat-terminierten Phosphanylcarboxamiden **VIII, IX** bzw. **X** sowie **VIII, IX** bzw. **X** äquivalenten Verbindungen mit oxidiertem Phosphor umgesetzt werden. Bevorzugt wird ein mindestens 2-facher mindestens einen Di- bzw. Polyisocyanats gegenüber dem Phosphanylcarboxamid bzw. Phosphor(III)säurecarboxamid verwendet. Die Reaktion kann in Lösungsmittel oder lösungsmittelfrei (z.B. mit überschüssigem Diisocyanat oder Polyisocyanat als (Reaktiv)verdünner) durchgeführt werden. Das Produkt wird nach der Abdestillation des Lösungsmittels bzw. des überschüssigen Diisocyanats oder Polyisocyanates erhalten.

Für die Herstellung Isocyanat-terminierter Phosphanylcarboxamide mit den Strukturen **VIII, IX** bzw. **X** werden bevorzugt Phosphanylcarboxamide der Struktur **VI** verwendet,
mit m = 0-3, n = 1-4, m+n ≥ 2;
und wobei der Substituent R ausgewählt ist aus (gegebenenfalls mit Heteroatomen substituierten) Organylresten, bevorzugt aus der Gruppe bestehend aus Trimethylen, Tetramethylen, Pentamethylen, Hexamethylen, Heptamethylen, Octamethylen, Nonamethylen, Decamethylen, Undecamethylen, Dodecamethylen gegebenenfalls Heteroatom-enthaltende Cyclohexylen, Phenylen, Diphenylen, Dimethylphenylen, 2-Methylpentamethylen, 2,2,4-Trimethylhexamethylen, Dodecamethylen, 1,2-Cyclohexylen, 1,3-Cyclohexylen, 1,4-Cyclohexylen, 5-(1-Methylen-(1,3,3-trimethylcyclohexan)), alle Regioisomere des Methylenbiscyclohexylens, alle Regioisomere des Methylenbisphenylens, Methylenbis-(3,3'-dimethylcyclohexan-1,4-diyl), Propan-2,2-diyl)bis(cyclohexan-4,1-diyl), Propane-2,2-diyl-bis-4,1-phenylen, Polyhexamethylen, Tolylen, Poly(propylenglycol)tolylen, Poly(ethylenadipate)Tolylen, 2,4,6-Trimethyl-1,3-phenylen, 4-Chloro-6-methyl-1,3-phenylen, Poly[1,4-phenylen], co-[Poly(1,4-butanediol)], Poly(tetrafluoroethylenoxid-co-difluoromethylenoxid), 1,3-Bis(1-methylethyl)benzen, 3,3'-Dimethyl-4,4'-biphenylen, Naphthalen, 1,2-Phenylen, 1,3-Phenylen, 1,4-Phenylen, 2,4- oder 2,5-oder 2,6- Tolylen sowie deren Isomerengemische, Methylen-4,4'- oder 2,4'- oder 2,2'- Bisphenylen sowie deren Isomerengemische, 4,4'-, 2,4'- oder 2,2'- 2,2'-Diphenylpropane-p-xylylen und α,α,α',α'-Tetramethyl- m- oder -p-xylylen;
und ganz besonders bevorzugt ausgewählt ist aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische;
und wobei X ausgewählt aus -PH₂, -PHR', -P(O)H₂, -P(O)HR', -P(O)(H)OH, -OH, -NH₂, -NHR', - NHC(O)PH₂, -NHC(O)PHR', - NHC(O)P(O)H₂, -NHC(O)P(O)HR', -NHCOOH, -NHC(O)NH₂, - NHC(O)NHR' (mit R' = gegebenenfalls mit Heteroatomen substituierter Organylrest).

Besonders bevorzugt verwendet werden Verbindungen der Struktur **VI** wobei:
m = 0, 1, n = 1, 2, m+n = 2;
R ausgewählt ist aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische; und
X = OH ist.

Für die Herstellung der Isocyanat-terminierten Phosphanylcarboxamide **VIII, IX** bzw. **X** werden bevorzugt folgende Polyisocyanate eingesetzt:
Methylendiphenyldiisocyanat (MDI), Tolyldiisocyanat (TDI), Naphthalendiisocyanat (NDI), Hexamethylendiisocyanat (HDI), Pentramethylendiisocyanat (PDI), Isophorondiisocyanat (IPDI), Methylendicyclohexyldiisocyanat (H₁₂MDI), sowie deren Oligomere und Derivate, wie z.B. Prepolymere.

Das molare Verhältnis von Isocyanat-Gruppen zu Isocyanat-reaktiven Gruppen der Verbindungen mit den Strukturen **VI** bzw. **VII** in der Reaktionsmischung zur Herstellung der Isocyanat-terminierten Phosphanylcarboxamide **VIII, IX** bzw. **X** ist > 1 und beträgt bevorzugt mindestens 2:1 und höchstens 40: 1, besonders bevorzugt mindestens 2: 1 und höchstens 10: 1.

Der Überschuss an Isocyanat kann nach Reaktion entweder als Reaktivverdünner in der Produktmischung verbleiben oder abdestilliert werden.

Die so hergestellten Isocyanat-terminierten Phosphanylcarboxamide **VIII, IX** bzw. **X** weisen insbesondere ein gemitteltes Molekulargewicht ermittelt durch Gelpermeationschromatographie von mindestens 300 g/mol und höchstens 10.000 g/mol, besonders bevorzugt von mindestens 300 g/mol und höchstens 2000 g/mol auf. Sie sind ganz besonders bevorzugt flüssig und weisen eine dynamische Viskosität bestimmt mit einem Kegel-Platten Viskosimeter von höchstens 30.000 mPa*s, besonders bevorzugt von höchstens 20.000 mPa*s bei 23 °C auf.

Für die Herstellung der Isocyanat-terminierten Phosphanylcarboxamide **VIII, IX** bzw. **X** werden bevorzugt Nitrile, wie z.B. Acetonitril, Propionitril, und Ether, wie z.B. Tetrahydrofuran, Diethylether, Dioxan als Lösungsmittel verwendet. Als Reaktivverdünner eignen sich insbesondere die gleichen Polyisocyanate, wie z.B. Methylendiphenyldiisocyanat (MDI), Tolylydiisocyanat (TDI), Naphthalendiisocyanat (NDI), Hexamethylendiisocyanat (HDI), Pentramethylendiisocyanat (PDI), Isophorondiisocyanat (IPDI), Methylendicyclohexyldiisocyanat (H₁₂MDI), sowie deren Oligomere und Prepolymere, mit welchen das Phosphanylcarboxamid **VI** umgesetzt wird.

Als Katalysatoren werden bevorzugt Lewis-Basen, wie z.B. Aminbasen, insbesondere tertiäre Amine, besonders bevorzugt Triethylamin, eingesetzt. Alternativ kann die Reaktion auch katalysatorfrei durchgeführt werden.

Für die Herstellung der zu **VIII, IX** bzw. **X** äquivalenten Verbindungen mit oxidiertem Phosphor werden entsprechend die **PCA** der Strukturen **VII** eingesetzt.

### Herstellung von Polymeren

Die di- und multifunktionellen **PCA** mit den Strukturen **VI** und **VII** sowie die Isocyanat-terminierten Verbindungen **VIII, IX** bzw. **X** können als Monomere und Prepolymere für die Herstellung neuer phosphorhaltiger Polymere verwendet werden, insbesondere zur Herstellung von phosphorhaltigen Polyurethanen und Polyisocyanuraten.

Für die Herstellung von PUR/PIR aus den Isocyanat-reaktiven Verbindungen **VI** bzw. **VII** werden diese mit Polyisocyanaten umgesetzt.

Die Isocyanat-terminierten Verbindungen **VIII, IX** bzw. **X** und deren Äquivalente mit oxidiertem Phosphor und deren Gemische mit Polyisocyanaten als Reaktivverdünner können mit entsprechenden Isocyanat-reaktiven Verbindungen, z.B. Polyolen, ebenfalls zu PUR/PIR umgesetzt werden.

Die Umsetzungen können in An- oder Abwesenheit eines geeigneten Katalysators, mit oder ohne ein zusätzliches Lösungsmittel erfolgen.

Zur Herstellung der phosphorhaltigen Polyurethane bzw. Polyisocyanurate werden bevorzugt Isocyanat-reaktive Phosphanylcarboxamide **VI** oder Phosphor(III)säurecarboxamide **VII**
mit m = 0-3, n = 1-4, m+n ≥ 2 verwendet,
wobei der Substituent Rausgewählt ist aus (gegebenenfalls mit Heteroatomen substituierten) Organylresten,
bevorzugt aus der Gruppe bestehend aus Trimethylen, Tetramethylen, Pentamethylen, Hexamethylen, Heptamethylen, Octamethylen, Nonamethylen, Decamethylen, Undecamethylen, Dodecamethylen gegebenenfalls Heteroatom-enthaltende Cyclohexylen, Phenylen, Diphenylen, Dimethylphenylen, 2-Methylpentamethylen, 2,2,4-Trimethylhexamethylen, Dodecamethylen, 1,2-Cyclohexylen, 1,3-Cyclohexylen, 1,4-Cyclohexylen, 5-(1-Methylen-(1,3,3-trimethylcyclohexan)), alle Regioisomere des Methylenbiscyclohexylens, alle Regioisomere des Methylenbisphenylens, Methylenbis-(3,3'-dimethylcyclohexan-1,4-diyl), Propan-2,2-diyl)bis(cyclohexan-4,1-diyl), Propane-2,2-diyl-bis-4,1-phenylen, Polyhexamethylen, Tolylen, Poly(propylenglycol)tolylen, Poly(ethylenadipate)Tolylen, 2,4,6-Trimethyl-1,3-phenylen, 4-Chloro-6-methyl-1,3-phenylen, Poly[1,4-phenylen], co-[Poly(1,4-butanediol)], Poly(tetrafluoroethylenoxid-co-difluoromethylenoxid), 1,3-Bis(1-methylethyl)benzen, 3,3'-Dimethyl-4,4'-biphenylen, Naphthalen, 1,2-Phenylen, 1,3-Phenylen, 1,4-Phenylen, 2,4- oder 2,5- oder 2,6- Tolylen sowie deren Isomerengemische, Methylen-4,4'- oder 2,4'- oder 2,2'- Bisphenylen sowie deren Isomerengemische, 4,4'-, 2,4'- oder 2,2'- 2,2'-Diphenylpropane-p-xylylen und α,α,α',α'-Tetramethyl- m- oder -p-xylylen;
und wobei X ausgewählt aus -PH₂, -PHR', -P(O)H₂, -P(O)HR', -P(O)(H)OH, -OH, -NH₂, -NHR', - NHC(O)PH₂, -NHC(O)PHR', - NHC(O)P(O)H₂, -NHC(O)P(O)HR', -NHCOOH, -NHC(O)NH₂, - NHC(O)NHR' (mit R' = gegebenenfalls mit Heteroatomen substituierter Organylrest).

Besonders bevorzugt eingesetzt werden Verbindungen der Struktur **VI** bzw. **VII,** dadurch gekennzeichnet, dass
m = 0, 1, n = 1, 2, m+n = 2;
R ausgewählt aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische und X = OH ist.

Zur Herstellung von PUR/PIR werden die **PCA** alleine oder mit weiteren Isocyanat-reaktiven Edukten sowie gegebenenfalls weiteren in der Polyurethanchemie üblichen Formulierungsbestandteilen mit Polyisocyanaten umgesetzt, also Isocyanaten mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4-und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen, in einer bevorzugten Ausführungsform werden Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und sich durch folgende Summenformel beschreiben lassen: C₁₅HioN₂O₂₁C₈H₅NO]ₙ , wobei n = ganze Zahl > 0, bevorzugt n = 1, 2, 3 und 4, ist. Höherkernige Homologe C₁₅H₁₀N₂O₂[C₈H₅NO]ₘ, m = ganze Zahl ≥ 4) können ebenfalls im Gemisch aus organischen Polyisocyanaten enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

In einer weiteren Ausführungsform werden zur Herstellung der phosphorhaltigen Polyurethane (PUR) / Polyisocyanurate (PIR) die Isocyanat-terminierten Verbindungen der Strukturen **VIII, IX** und / oder X bzw. deren Äquivalente mit oxidiertem Phosphor
mit m = 1, 2; n = 1-4; o = 1-3 und
R ausgewählt aus (gegebenenfalls mit Heteroatomen substituierten) Organylresten, bevorzugt ausgewählt aus der Gruppe bestehend aus Ethyl, Butyl, Propyl, Pentyl, Hexyl, Isosorbid, Methylendiphenyl, Tolyl, aromatische Reste basierend auf Lignin, wie z.B. Dimethoxyphenyl, Oranganylreste basierend auf Furan und ganz besonders bevorzugt ausgewählt ist aus der Gruppe bestehend aus Propyl, Butyl und Pentyl, Hexyl, Methylendiphenyl, Tolyl,
verwendet,
um in PUR/PIR - Reaktionsmischungen die üblicherweise verwendete Isocyanatkomponente ganz oder teilweise zu ersetzen.

Besonders bevorzugt verwendet werden Verbindungen **VIII, IX** bzw. **X**
mit m = 2; n = 1, 2; n = 1 und
wobei R ausgewählt ist aus der Gruppe bestehend aus Propyl, Butyl und Pentyl, Hexyl, Methylendiphenyl, Tolyl,
zur Herstellung von PUR/PIR eingesetzt.

Die neuartigen Polymere besitzen durch den eingebauten Phosphor einen intrinsischen Flammschutz und sind daher insbesondere geeignet für Anwendungen, bei denen es auf einen guten und dauerhaften Flammwiderstand ankommt, z.B. bei PUR/PIR - Hartschaumanwendungen in der Bauindustrie.

Die Verbindungen PCA und die aus ihnen hergestellten Polymere können auch selbst als Zusatzstoffe für Polymere verwendet werden, insbesondere als Flammschutz - Additive. Hierfür sind Verbindungen mit Zersetzungstemperaturen von > 150 °C besonders günstig, insbesondere > 155 °C und < 250 °C.

### Beispiele

### Ausgangsstoffe:

Roter Phosphor (99 %, amorphes Pulver), Natrium (99 %, Stäbe in Paraffinöl), Ethylencarbonat (99 %), Diethylcarbonat (99 %), tert-Butanol (99,5 %), Triethylammoniumhydrochlorid (99+ %), Hexamethylendiisocyanat (HDI) (99 %), 6-Aminohexanol (98 %), 1,6-Diaminohexandihydrochlorid (99 %), 5-Aminopentanol (92 %), 1,5-Diaminopentan (99 %), 1,4-Diaminobutandihydrochlorid (99+ %), 1,3-Diaminopropan (99 %), Ethanolaminhydrochlorid (99+ %), Diethylamin (99,5 %), 4,4'-Diaminodiphenylmethan (97 %), *meta*-Chlorperbenzoesäure (m-CPBA, 77+ %), 1,4-Diazabicyclo[2.2.2]octan (DABCO, 99+ %), 1,4-Butandiol (99 %) und Wasserstoffperoxid (wässrige Lösung, 30 %) wurden ohne weitere Aufreinigung eingesetzt. Naphthalin (99 %) wurde vor der Verwendung sublimiert. 1,6-Diaminohexandihydrochlorid wurde nach Literaturvorschriften (Neumann, J.; Bornschein, C.; Jiao, H.; Junge, K.; Beller, M. Hydrogenation of Aliphatic and Aromatic Nitriles Using a Defined Ruthenium PNP Pincer Catalyst. European J. Org. Chem. 2015, 2015 (27), 5944-5948 (https://doi.org/10.1002/ejoc.201501007); Armarego, W. L. F.; Perrin, D. D. Purification of Laboratory Chemicals Eighth Edition; 2017) synthetisiert. 6-Aminohexanolhydrochlorid, 5-Aminopentanolhydrochlorid, 1,5-Diaminopentandihydrochlorid, 1,3-Diaminopropandihydrochlorid, Ethylendiamindihydrochlorid und 4,4'-Diaminophenylmethandihydrochlorid wurden in Analogie dazu durch die Reaktion der korrespondierenden Aminoalkohole oder Amine mit etherischer oder wässriger HCl-Lösung in geeigneten Lösungsmitteln hergestellt. Die Lösungsmittel 1,2-Dimethoxyethan (DME), Tetrahydrofuran (THF), 1,4-Dioxan, Diethylether (Et₂O), Dichlormethan (CH₂Cl₂) und Acetonitril (CH₃CN) wurden vor der Verwendung destilliert und unter Schutzgas über Molsieb (3 Ä: CH₃CN, 4 Ä: DME, THF, 1,4-Dioxan, Et₂O, CH₂Cl₂) gelagert. NaOCP(1,4-Dioxan)ₓ (X = 2 - 3) wurde nach einer Literaturvorschrift (Heift, D.; Benkö, Z.; Grützmacher, H. Coulomb Repulsion versus Cycloaddition: Formation of Anionic Four-Membered Rings from Sodium Phosphaethynolate, Na(OCP). Dalt. Trans. 2014, 43 (2), 831-840. https://doi.org/10.1039/C3DT52359D) hergestellt. Der Dioxangehalt der einzelnen Chargen wurde durch NMR-Methoden und Elementaranalyse bestimmt. Natrium-Sand wurde hergestellt, indem blanke Natriumstücke in Xylol unter Schutzgas geschmolzen und mit einem KPG-Rührer fein dispergiert wurden.

### Messmethoden:

Kernspinresonanzexperimente wurden an dem Gerät *AVANCE III HD Nanobay 400 MHz Ultrashield* der Firma Bruker durchgeführt. Infrarot (IR) Spektren wurden bei Raumtemperatur mit einem Bruker Vertex 70 Spektrometer mit RAM II Modul (d-YAG Laser, 1064 nm) aufgenommen.

Elementaranalysen wurden mit einem Vario MICRO cube Elementaranalysator (Elementar Analysatorsysteme GmbH) im CHNS Modus durchgeführt. TGA Messungen wurden an einem TG 50 von Mettler Toledo in Keramiktiegeln durchgeführt. Viskositätsmessungen: Die Bestimmung der dynamischen Viskositäten erfolgte mit einem MCR 501-Rehometer (Fa. Anton Paar) bei 23 °C gemäß DIN EN ISO 3219:1994-10. Durch Messung bei unterschiedlichen Scherraten wurde sichergestellt, dass von newtonischem Fließverhalten ausgegangen werden kann. Angaben zur Scherrate können daher entfallen.

### Herstellung von Phosphanylcarboxamiden (PCA) (VI, VII)

### Methode 1: Ausgehend von den Salzen der Amine und Aminoalkohole und NaOCP(1,4-Dioxan)_{2,4}

Das Edukt Diamindihydrochlorid (1 Äq.) bzw. Aminoalkoholhydrochlorid (2 Äq.) (siehe Tabelle 1) und Na(OCP)(Dioxan)_{2,4} (2,1 Äq.) wurden in Acetonitril (CH₃CN) suspendiert und über Nacht bei RT gerührt. Abhängig vom verwendeten Diamindihydrochlorid oder Aminoalkoholhydrochlorid wurde entsprechend aufgearbeitet:
**Beispiel 1- 4:** Die resultierende beige Suspension wurde filtriert und der Filterrückstand mit CH₃CN oder warmem CH₃CN gewaschen. Das Produkt kristallisierte bei verringerter Temperatur (z.B. -30 °C) oder durch Zugabe von geeigneten Lösungsmitteln wie z.B. Diethylether (Et₂O) aus dem aufkonzentrierten Filtrat aus. Das Produkt wurde nach einfachem oder mehrfachem Umkristallisieren, Filtration und Trocknen im Vakuum als Feststoff erhalten.
**Beispiel 5a, Beispiel 8:** Die resultierende beige Suspension wurde filtriert und das Produkt mittels Soxhlet-Extraktion des Filterrückstandes mit CH₂Cl₂ und anschließender Trocknung im Vakuum als weißer Feststoff erhalten.
**Beispiel 7:** Die resultierende beige Suspension wurde filtriert, der Filterrückstand mit CH₃CN gewaschen und das Filtrat im Vakuum getrocknet, um das Produkt als gelbes Öl zu erhalten.

Die jeweiligen Edukte für die PCAs, die Strukturen, Schmelzpunkte und ³¹P NMR-Signale der entsprechenden Produkte sind in **Tabelle 1** angegeben.

### Methode 2: Ausgehend von den Salzen der Amine und Aminoalkohole und mit einer dioxanfreien NaOCP-Reaktionslösung

### a) Herstellung und Quantifizierung einer NaOCP-Reaktionslösung

Roter Phosphor (3 g, 97 mmol, 1 Äq.), Naphthalin (620 mg, 5 mmol, 0,05 Äq.) und Natrium-Sand (6,68 g, 291 mmol, 3 Äq.) wurden in 420 mL DME suspendiert und mit einem KPG-Rührer für 4 h bei RT gerührt. Die resultierende schwarze Suspension wurde auf 0 °C gekühlt und 30 °C warmes tert-Butanol (18,53 mL, 194 mmol, 2 Äq.) langsam zugegeben. Die graue Suspension wurde für eine weitere Stunde bei RT gerührt, auf 0 °C gekühlt und anschließend eine Lösung von Ethylencarbonat (8,53 g, 97 mmol, 1 Äq.) in 90 mL DME über eine Stunde tropfenweise zugegeben. Die grüngelbe Suspension wurde über Nacht bei RT gerührt, anschließend über eine Schlenkfritte filtriert und der grüne Filterrückstand wurde mit DME gewaschen (3 x 30 mL), um eine klare, gelbe NaOCP-Lösung zu erhalten. Der NaOCP-Gehalt dieser Lösung wurde mit Hilfe einer Kalibriergeraden IR-spektroskopisch bestimmt. Die NaOCP-Lösung ist gekühlt und unter Schutzgas für mindestens 6 Wochen lagerstabil und kann ohne weitere Behandlung für die Darstellung der PCAs verwendet werden.

### b) Erstellung der Kalibriergrade für die Quantifizierung des NaOCP-Gehaltes der NaOCP-Reaktionslösung

Zur Erstellung der Kalibriergeraden wurde eine NaOCP Standardlösung in DME/ CH₃CN (70/30) hergestellt (Reinheit und Dioxangehalt des verwendeten NaOCP(1,4-Dioxan)_{2.23} wurden durch NMR-Spektroskopie und Elementaranalyse bestimmt). Die Absorbanz der CO-Streckschwingung des NaOCP (1760 cm⁻¹)wurde in einer Dünnschichtflüssigküvette durch eine Transmissionsmessung bestimmt. Die Methode wurde durch eine Standardadditionsmethode validiert. Für weitere Proben wurde ein Aliquot der Reaktionslösung entnommen, verdünnt und gleichermaßen gemessen.

### Beispiel 5b: Herstellung von PCA-5 ausgehend von der NaOCP-Reaktionslösung anhand des Beispiels der Synthese von N,N'-(Hexan-1,6-diyl)bis(phosphanylcarboxamid)

Zu der NaOCP-Reaktionslösung (0,105 M, 80 mL, 8,34 mmol, 2 Äq.) aus a) wurde bei Raumtemperatur unter starkem Rühren erst 1,6-Diaminohexandihydrochlorid (0,78 g, 4,17 mmol, 1 Äq.) und danach Triethylammoniumhydrochlorid (2,02 g, 7,30 mmol, 1,75 Äq.) rasch zugegeben. Die anfänglich gelbe Suspension färbte sich bei Rühren über Nacht hellbraun. Die Suspension wurde filtriert, der blassbraune Filterrückstand mit CH₃CN (3 x 5 mL) gewaschen und im Vakuum getrocknet. Das Produkt wurde durch Soxhlet-Extraktion des Filterrückstandes mit CH₂Cl₂ und anschließender Trocknung im Vakuum als farbloser Feststoff erhalten.

### Methode 3: Herstellung ohne Filtration der NaOCP-Reaktionslösung (Eintopfreaktion)

### Beispiel 8b: Herstellung von PCA-8 ausgehend von der NaOCP-Reaktionslösung anhand des Beispiels der Synthese von (N-(6-hydroxyhexyl)phosphanylcarboxarnid)

Roter Phosphor (0,5 g, 16 mmol, 1 Äq.), Naphthalin (103 mg, 1 mmol, 0,05 Äq.) und Natrium-Sand (1,14 g, 48 mmol, 3 Äq.) wurden in 200 mL DME suspendiert und für 12 h bei RT gerührt. Die resultierende schwarze Suspension wurde auf 0 °C gekühlt und warmes tert-Butanol (3,1 mL g, 32 mmol, 2 Äq.) langsam zugegeben. Die graue Suspension wurde für eine Stunde bei RT gerührt, auf 0 °C gekühlt und eine Lösung aus Ethylencarbonat (1,421 g, 16 mmol, 1 Äq.) in 10 mL DME über eine Stunde tropfenweise zugegeben. Die grüngelbe Suspension wurde über Nacht bei RT gerührt. Zu der NaOCP-Suspension (0,038 M, 215 mL, 8,3 mmol, 1,04 Äq.) wurde bei RT erst 6-Aminohexanol (0,96 mL, 8 mmol, 1 Äq.) und danach Triethylammoniumhydrochlorid (6.7 g, 48 mmol, 6 Äq.) rasch zugegeben. Die Suspension färbte sich bei Rühren über Nacht hellbraun. Die Suspension wurde filtriert und der blassbraune Filterrückstand mit CH₃CN (3 x 5 mL) gewaschen. Das Produkt wurde aus dem Filtrat bei -30 °C als farbloser Feststoff ausgefällt.

### Beispiel 5c: Herstellung von PCA-5 in einem Schritt anhand des Beispiels der Synthese von N,N'-(Hexan-1,6-diyl)bis(phosphanylcarboxamid) (Aufarbeitung mittels Soxhlet-Extraktion)

Roter Phosphor (250 mg, 8 mmol, 1 Äq.), Naphthalin (52 mg, 0.4 mmol, 0.05 Äq.) und Natrium-Sand (557 mg, 24 mmol, 3 Äq.) wurden in 15 mL DME suspendiert und für 16 h bei RT stark gerührt. Die resultierende schwarze Suspension wurde auf 0 °C gekühlt und eine Lösung aus *tert-*Butanol (1.55 mL, 16 mmol, 2 Äq.) und Diethylcarbonat (0.98 mL, 8 mmol, 1 Äq.) in 15 mL DME tropfenweise zugegeben. Die grüngelbe Suspension wurde für 16 h bei RT gerührt. Der NaOCP-Gehalt der überstehenden gelben Lösung wurde IR-spektroskopisch mit Hilfe einer Kalibriergeraden bestimmt. Die benötigten Mengen 1,6-Diaminohexandihydrochlorid und Triethylammoniumhydrochlorid wurden entsprechend der NaOCP-Konzentration festgelegt. Zu der Suspension wurde unter starkem Rühren erst 1,6-Diaminohexandihydrochlorid (565 mg, 2.98 mmol, 0.37 Äq.) und danach Triethylammoniumhydrochlorid (2,51 g, 18.25 mmol, 2.26 Äq.) rasch zugegeben. Die Suspension verfärbt sich bei der Zugabe von Triethylammoniumhydrochlorid rasch schwarz und ändert die Farbe wenige Sekunden nach dem Ende der Zugabe zu braun-orange. Die Suspension wurde über Nacht bei RT gerührt und anschließend im Vakuum getrocknet, sodass ein brauner Feststoff erhalten wurde. Das Produkt wurde durch Soxhlet-Extraktion mit CH₂Cl₂ und anschließender Trocknung im Vakuum als blassgelber Feststoff erhalten.

### Beispiel 5d: Herstellung von PCA-5 in einem Schritt anhand des Beispiels der Synthese von N,N'-(Hexan-1,6-diyl)bis(phosphanylcarboxamid)

Roter Phosphor (7,03 g, 0,23 mol, 1 Äq.), Naphthalin (1,45 g, 0.4 mmol, 0.05 Äq.) und Natrium (15,7 g, 0,68 mol, 3 Äq.) wurden in 120 mL DME suspendiert und für 16 h bei RT stark gerührt. Die resultierende schwarze Suspension wurde auf 0 °C gekühlt und eine Lösung aus tert-Butanol (43,43 mL, 0,46 mol, 2 Äq.) und Diethylcarbonat (27,5 mL, 0,23 mol, 1 Äq.) in 120 mL DME tropfenweise zugegeben. Die grüngelbe Suspension wurde für 16 h bei RT gerührt. Der NaOCP-Gehalt der überstehenden gelben Lösung wurde IR-spektroskopisch mit Hilfe einer Kalibriergeraden bestimmt. Die benötigten Mengen 1,6-Diaminohexandihydrochlorid und Triethylammoniumhydrochlorid wurden entsprechend der NaOCP-Konzentration festgelegt. Zu der NaOCP-Suspension (0,538 M, 310 mL, 0,167 mol, 0,74 Äq.) wurde unter starkem Rühren erst 1,6-Diaminohexandihydrochlorid (15,8 g, 0,084 mol, 0.37 Äq.) und danach Triethylammoniumhydrochlorid (70,7 g, 0,51 mmol, 2.26 Äq.) rasch zugegeben. Die Suspension verfärbt sich bei der Zugabe von Triethylammoniumhydrochlorid rasch schwarz und ändert die Farbe wenige Sekunden nach dem Ende der Zugabe zu braun-orange. Die Suspension wurde über Nacht bei RT gerührt und anschließend im Vakuum getrocknet, sodass ein brauner Feststoff erhalten wurde. Die getrocknete Suspension wurde mit Wasser gewaschen und durch Soxhlet-Extraktion mit CH₂Cl₂ extrahiert um das Produkt PCA-5 zu erhalten.

**Tabelle 1: Hergestellte Verbindungen PCA (Struktur VI)**

| **Beispiel** | **Produktbezeichnung** | **Ausgangsverbindung** | **Produkt** | **Smp. in °C** | **³¹P{¹H} NMR in ppm** |
|---|---|---|---|---|---|
| 1 | PCA-1 hergestellt nach Methode 1a) | 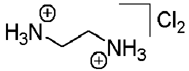 | 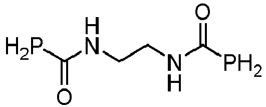 | 158-160 | -134,1 |
| 2 | PCA-2 hergestellt nach Methode 1a) | 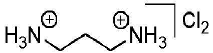 | 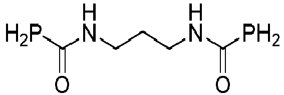 | 115-117 | -133,4 |
| 3 | PCA-3 hergestellt nach Methode 1a) | 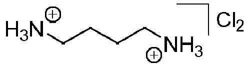 | 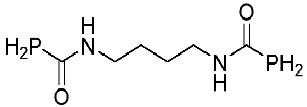 | | -133,7 |
| 4 | PCA-4 hergestellt nach Methode 1a) | 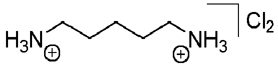 | 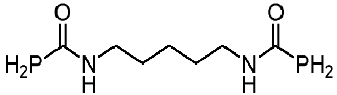 | 130-132 | -131,4 |
| 5a | PCA-5 hergestellt nach Methode 1b) | 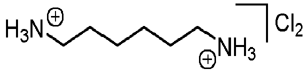 | 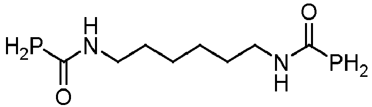 | 130-132 | -131,4 |
| 5b | PCA-5 hergestellt nach Methode 2b) | 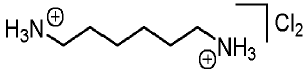 | 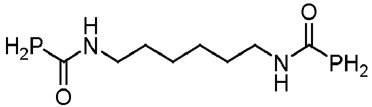 | 130-132 | -131,4 |
| 5c, 5d | PCA-5 hergestellt nach Methode 3) | 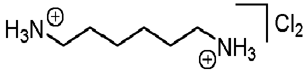 | 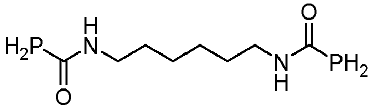 | 130-132 | -131,4 |
| 6 | PCA-6 hergestellt nach Methode 1a) | 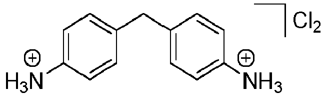 | 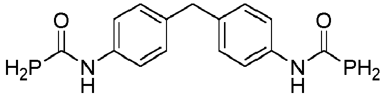 | Zersetzung >141 | -125,7 |
| 7 | PCA-7 hergestellt nach Methode 1a) | 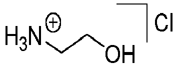 | 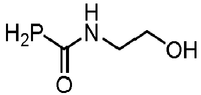 | <25 | -134,2 |
| 8a | PCA-8 hergestellt nach Methode 1c) | 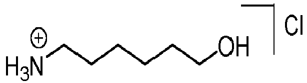 | 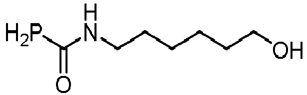 | 65-67 | -134,6 |
| 8b | PCA-8 hergestellt nach Methode 3) | 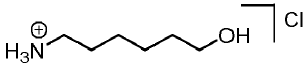 | 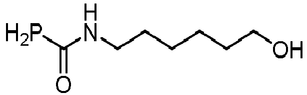 | 65-67 | -134,6 |
| 9a, 9b | PCA-9 | PCA-5 | 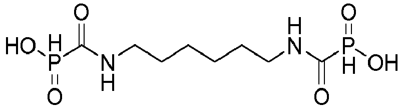 | <25- | 6,6 |
| 10 | PCA-10 | PCA-8 | 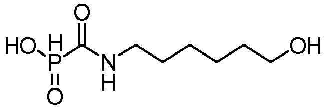 | <25 | 6,6 |
| 11 | NCO-PCA-5 | PCA-5 | 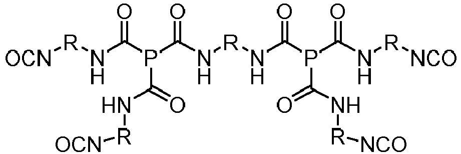 | <25 | -46,6 |
| 12 | NCO-PCA-8 | PCA-8 | 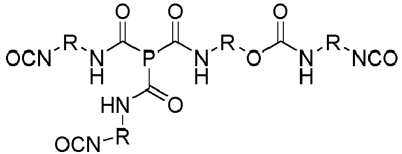 | <25 | -45,8 |

### Vorschrift zur Herstellung der Bis(phosphor(III)säurecarboxamide) (VII)

Bis(phosphanylcarboxamid) (1 Äq.) bzw. Hydroxy-R-phosphanylcarboxamid (2 Äq.) wurde in CH₂Cl₂ (nur für *meta*-Chlorperbenzoesäure (*m*-CPBA)), CH₃CN oder Wasser gelöst oder suspendiert und ein Oxidationsmittel, wie z.B. *m*-CPBA oder wässrige Wasserstoffperoxid-Lösung (H₂O₂; 2 oder 4 Äq.) zugegeben. Das Produkt wurde durch Filtration des farblosen Niederschlages (bei Verwendung von *m*-CPBA) und durch Entfernen des Lösungsmittels und Wasser im Vakuum als farbloses Öl erhalten.

### Herstellung von N,N'-(Hexan-1,6-divl)bis(phosphor(III)säurecarboxamid (PCA-9)

### Beispiel 9a: Durch Oxidation von PCA-5 mit Meta-Chlorperbenzoesäure (m-CPBA):

Zu einer Suspension von PCA-5 (100 mg, 0,42 mmol, 1 Äq.) in CH₂Cl₂ (5 mL) wurde *meta*-Chlorperbenzoesäure (*m*-CPBA, 146 mg, 0,84 mmol, 2 Äq.) zugegeben. Die weiße Suspension wurde für 12 h bei RT gerührt. Die Reaktionslösung wurde filtriert und das Filtrat im Vakuum getrocknet um das Produkt als farbloses Öl zu erhalten.

### Beispiel 9b: Durch Oxidation von PCA-5 mit wässriger H₂O₂-Lösung:

Zu einer Suspension von PCA-5 (100 mg, 0,42 mmol, 1 Äq.) in entionisiertem Wasser (5 mL) wurde unter Rühren eine wässrige Lösung von H₂O₂ (0,4 mL, 4,31 M, 1,68 mmol, 4 Äq.) zugetropft. Dabei wurde der pH-Wert der Reaktionsmischung durch die Zugabe von NEt₃ zwischen pH 8 und pH 10 gehalten. Die Suspension wurde für 12 h bei RT gerührt und der Überschuss an H₂O₂ durch Zugabe von Mangan(IV)oxid gequencht. Die klare Reaktionslösung wurde filtriert und das Filtrat im Vakuum bei 60°C getrocknet um das Produkt als farbloses Öl zu erhalten.

### Beispiel 10: Herstellung von (N-(6-hydroxyhexyl)phosphor(III)säurecarboxamid (PCA-10) durch Oxidation von PCA-8 mit wässriger H₂O₂-Lösung:

Zu einer Lösung von PCA-8 (40,5 mg, 0,23 mmol, 1 Äq.) in entionisiertem Wasser (4 mL) wurde unter Rühren eine wässrige Lösung von H₂O₂ (106 µL, 4,31 M, 0.46 mmol, 2 Äq.) zugetropft. Die Reaktionsmischung wurde für 12 h bei RT gerührt. Der Überschuss an H₂O₂ wurde durch die Zugabe von Mangan(IV)oxid gequencht und die Reaktionslösung filtriert. Das Produkt wurde aus dem Filtrat nach Trocknung im Vakuum bei 60 °C als farbloses Öl erhalten.

### Herstellung Isocyanat-terminierter Bis(phosphanylcarboxamide) und Hydroxyphosphanylcarboxamide (IX, X)

### Beispiel 11: Isocyanat-terminiertes NCO-PCA-5 (Struktur IX):

Eine Suspension aus PCA-5 (12,36 g, 0,05 mol, 1 Äq.) und NEt₃ (0,3 mL) in 400 mL CH₃CN wurde unter starkem Rühren mit einem KPG-Rührer sehr langsam in einen Überschuss Hexamethylendiisocyanat (HDI) (528,2 g, 503 mL, 3,08 mol, 60 Äq.) getropft. Die farblose Suspension wurde für 16 h bei RT gerührt und filtriert um eine sehr geringe Menge (<20 mg) Feststoff zu entfernen. Aus dem Filtrat wurden Lösungsmittel und überschüssiges HDI durch Destillation entfernt. Das Produkt wurde als Flüssigkeit erhalten. NCO-Zahl: 18,6 %, Viskosität: 3600 mPas; Brechungsindex (nD20): 1,5299; ³¹P NMR (CD₃CN, 300K, in ppm): δ = - 46,6.

### Beispiel 12: Isocyanat-terminiertes NCO-PCA-8 (Struktur X):

Eine Lösung aus PCA-8 (12,85 g, 0,07 mol, 1 Äq.) und NEt₃ (0,3 mL) in 200 mL CH₃CN wurde unter starkem Rühren mit einem KPG-Rührer sehr langsam in einen Überschuss HDI (365,9 g, 348,6 mL, 2.18 mol, 30 Äq.) getropft. Die farblose, klare Lösung wurde für 16 h gerührt. Das Lösungsmittel und das überschüssige HDI wurde durch Destillation entfernt. Das Produkt wurde als Flüssigkeit erhalten. NCO-Zahl: 17,3 %, Viskosität: 2350 mPas; Brechungsindex (nD20): 1,5113; ³¹P NMR (CD₃CN, 300K, in ppm): δ = - 45,8.

### Beispiel 13: Verwendung der NCO-PCAs zur Herstellung von Polyurethan-Duroplasten

Eine Formulierung bestehend aus 1,4-Butandiol (2 mL), **NCO-PCA-8** (0,3 mL) und Wasser (0,02 mL) wurde auf 70 °C erwärmt und anschließend mit katalytischen Mengen DABCO (1,4-Diazabicyclo[2.2.2]octan) versetzt. Das Reaktionsgemisch härtet zu einem weißen polyurethanhaltigen Feststoff aus. Anhand von IR-Spektroskopie konnte die Bildung von Urethanbindungen nachgewiesen wurden.

### TGA-Analysen (Zersetzungstemperaturen)

TGA-Analysen wurden unter Schutzgas durchgeführt. Die Zersetzungstemperaturen von PCA-5 und PCA-8 liegen mit ca. 160 °C unter der von NCO-PCA-5 (T_{d} = 180 °C) und NCO-PCA-8 (190 °C). HDI wurde zum Vergleich gemessen und hat eine Zersetzungstemperatur von 180 °C.

**Tabelle 2: Zersetzungstemperaturen (T_{d}) ausgewählter PCAs und NCO-PCAs**

| **Substanz** | **T_{d} (in °C**) |
|---|---|
| HDI | 180 |
| PCA-5 | 160 |
| PCA-8 | 160 |
| NCO-PCA-5 | 180 |
| NCO-PCA-8 | 190 |

| | |
|---|---|
| T_{d} angegeben bei 5% Masseverlust (± 5%) | |

### Flammschutztests

Die Tests wurden gemäß DIN EN ISO 15025 (vertikaler Flammtest) durchgeführt. Dazu wurden Teststreifen aus Baumwollstoff (Cotton Lawn Rubbing Fabric (BS EN ISO 105-109)) in 20 cm x 8 cm Streifen vorbereitet. Zum Imprägnieren wurden die Baumwollstreifen in CH₃CN-Lösungen der Proben getaucht. Die Baumwollproben wurden vor und nach der Imprägnierung bei 60 °C für 1 h getrocknet und für 24 h an Atmosphäre konditioniert. Proben und Beladungen sind in Tabelle 3 zusammengefasst. Blank-Proben wurden mit reinem CH₃CN behandelt. Für die anderen Proben wurden Lösungen von HDI (ca. 4,00 g), NCO-PCA-8 (ca. 4,00 g) und NCO-PCA-5 (ca. 2,00 g) in 30 - 50 mL CH₃CN verwendet. HDI verdunstete anscheinend restlos während der Behandlung der Proben. Tabelle 3 zeigt den Massenanteil an Phosphor sowie die Massen ausgewählter Proben vor und nach der Verbrennung.

**Tabelle 3: Übersicht über Proben.**

| **Probe** | **m (in g)*** | **P - Anteil in %**** | **Masse nach Verbrennung (in g)** |
|---|---|---|---|
| Blank | 1,692 | 0 | 0 |
| HDI | 1,695 | 0 | 0 |
| NCO-PCA-8 | 1,838 | 0,40 | Ca. 30 mg |
| NCO-PCA-5 | 1,834 | 0,54 | Ca. 30 mg |

| | | | |
|---|---|---|---|
| *Masse der imprägnierten und getrockneten Probe. ** Anteil der Masse von P an der Gesamtmasse der Probe. | | | |

Die Proben wurden für 10 Sek. gemäß der DIN-Norm beflammt. Die HDI- und Blank-Proben entzündeten sich rasch und verbrannten vollständig innerhalb von ca. 30 Sek. Sobald die Flamme die gesamte Oberfläche der Probe verzehrt hatte und sich wieder verkleinerte, glommen die zusammengeschrumpften Überreste für ca. 15 Sek. nach. Von den Proben blieben geringe Mengen sehr leichter grauer Ascheflocken zurück, die nicht gesammelt werden konnten.

Die mit **NCO-PCA-5** und **NCO-PCA-8** imprägnierten Proben entzündeten sich ebenfalls rasch und die Flammen breiteten sich innerhalb von ca. 20 Sek. über die gesamte Oberfläche aus. Die Proben verbrannten jedoch nicht vollständig. Die Flammen erloschen sehr schnell und ohne Nachglimmen, wobei die geschwärzten Proben in erkennbarer (rechteckiger) Form zurückblieben. Die Restmasse der verkohlten Proben betrug durchschnittlich 30 mg.

### Herstellung transluzenter Schäume

### Verwendete Komponenten:

Trimerisierungs-Katalysatoren: Desmorapid^{®} 30HB14 (36 Gew.-% Kaliumformiat, 64 Gew.-% Ethylenglycol)
Katalysator: Dimethylzinnneodecanoat (Formrez UL-28)
Verwendete Polyole/Alkohole A): Ethylenglycol
Schaumstabilisatoren (Polyether-Polydimethylsiloxan-Copolymere): Tegostab^{®} B8490
Verwendete Iso- und Polyisocyanate B): Desmodur^{®} N3600 (Isocyanuratgruppen-haltiges Polyisocyanat auf Basis von 1,6-Diisocyanatohexan (HDI) mit einem NCO-Gehalt von 23,2 Gew.-%, einer mittleren NCO-Funktionalität von 3,2 (nach GPC), einem Gehalt an monomerem HDI von maximal 0,2 Gew.-% und einer Viskosität von 1200 mPas (23 °C)), Bayhydur^{®} 3100 (Hydrophiles Isocyanuratgruppen-haltiges Polyisocyanat auf Basis von 1,6-Diisocyanatohexan (HDI) mit einem NCO-Gehalt von 17,4 Gew.-%, einer mittleren NCO-Funktionalität von 3,2 (nach GPC), einem Gehalt an monomerem HDI von maximal 0,1 Gew.-% und einer Viskosität von 2800 mPa*s (23 °C)), NCO-PCA-5 (Viskosität von 3600 mPa*s (23 °C))

### Beispiel 14: Transluzenter Schaum enthaltend NCO-PCA-5

Eine Isocyanat-reaktive Zusammensetzung aus 0,18 g Ethylenglykol, 0,22 g Wasser, 0,18 g Schaumstabilisator Tegostab B8490 und 0,38 g Katalysator Desmorapid^{®} 30HB14 sowie 0,13 g Formrez UL-28 wurde mit einem Isocyanatgemisch aus 10,76g Desmodur^{®} ultra N3600, 2,39 g Bayhydur^{®} 3100 und 10,76 g NCO-PCA-5 für 15 Sekunden mit einem Speedmixer bei 3540 U/min quasi blasenfrei vermischt und vorsichtig in eine Form ausgegossen. Danach wurde die Form in einen Ofen bei 74°C gestellt. Der Schaum war nach 240 Sekunden abgebunden. Danach wurde der Schaum weitere 120 Minuten bei 74° im Ofen getempert.

Die Zellgröße betrug ca. 1 bis 3 mm.

### Beispiel 15 (Vergleichsbeispiel): Transluzenter Schaum ohne NCO-PCA-5

Eine Isocyanat-reaktive Zusammensetzung aus 0,34 g Ethylenglykol, 0,22 g Wasser, 0,18 g Schaumstabilisator Tegostab B8490 und 0,38 g Katalysator Desmorapid^{®} 30HB14 sowie 0,13 g Formrez UL-28 wurde mit einem Isocyanatgemisch aus 21,38g Desmodur^{®} ultra N3600 und 2,38 g Bayhydur^{®} 3100 für 15 Sekunden mit einem Speedmixer bei 3540 U/min quasi blasenfrei vermischt und vorsichtig in eine Form ausgegossen. Danach wurde die Form in einen Ofen bei 73°C gestellt. Der Schaum war nach 540 Sekunden abgebunden. Danach wurde der Schaum weitere 120 Minuten bei 74° im Ofen getempert.

### Die Zellgröße betrug ca. 1 bis 3 mm.

### Brandprüfung / Bestimmung der Wärmefreisetzung entsprechend ISO 5660-1

In der Prüfeinrichtung »Cone Calorimeter« nach ISO 5660-1 wird die Wärmefreisetzungsrate des zu prüfenden Produkts ermittelt.

**Tabelle 3: Brandprüfungsergebnisse**

| **Testbedingungen** | **Vergleichsbeispiel 14** | **Beispiel 13** |
|---|---|---|
| | **Standardschaum** | **enthaltend NCO-PCA-5** |
| Heat Flux (kW/m²) | 25 | 25 |
| | | |
| | | |

| **Prüfkörper** | | |
|---|---|---|
| Gewicht (g) | 13,9 | 14,0 |
| Dicke (mm) | 28,7 | 25,1 |
| Oberfläche (cm²) | 88,4 | 88,4 |
| | | |

| **Zeiten** | | |
|---|---|---|
| Entzündung (s) | 12 | 12 |
| Erlöschen (s) | 388 | 183 |
| Testende (s) | 600 | 600 |
| HRRPeak (kW/m²) | 203 | 239 |
| MARHE (kW/m²) (Maximum average rate of heat emission) | 172 | 202 |
| HRR_{average} (kW/m²) | 57 | 54 |
| THR (MJ/m²) Total heat release | 34 | 32 |
| Total Mass Loss (g) | 13,0 | 13,8 |
| EHC (MJ/kg) | 23,0 | 20,3 |
| Effective heat of combustion | | |

| | | |
|---|---|---|
| Heat flux: Bestrahlungsstärke mit der die jeweilige Probe bestrahlt wurde HRR (Heat Release Rate): Wärmefreisetzung HRRₚₑₐₖ: Maximum der Wärmefreisetzung HRR_{average}: mittlere Wärmefreisetzung THR (Total Heat Release): Gesamtwärmefreisetzung | | |

Die Daten zeigen, dass das als Flammschutzmittel aktive NCO-PCA-5 in Beispiel 1 zu Beginn des Experiments nicht aktiv ist: Die Zeit bis zur Selbstentzündung ist gleich, die Hitze des ersten Aufflackerns sogar etwas intensiver als beim Vergleichsbeispiel ohne NCO-PCA-5. Dann aber sorgt das als Flammschutzmittel aktive NCO-PCA-5 in Beispiel 1 überraschend schnell eine Selbstverlöschung. Dies erfolgt nicht durch verbesserte Verkohlung (der Massenverlust ist vergleichbar), sondern durch sehr effektive Unterbrechung der Oxidationsreaktionen in der Flamme. Dazu korrespondiert die geringere effektive Wärmefreisetzung.

Das als Flammschutzmittel aktive NCO-PCA-5 in Beispiel 1 sorgt damit zu einer Verbesserung der Gesamtwärmefreisetzung, die eines der wichtigen Kriterien zur Freigabe von Materialien im Bauwesen ist.

## Patentansprüche

1. Organische Phosphorverbindungen **PCA, dadurch gekennzeichnet, dass** sie eine der Isocyanat-reaktive Gruppen enthaltenden Strukturen **VI** oder **VII** aufweisen 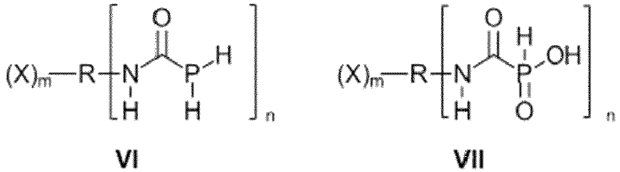 wobei
X eine NCO-reaktive Gruppe,
m = 0, 1, 2 oder 3,
n = 1, 2, 3 oder 4 und
m+n≥2
und R ein (gegebenenfalls mit Heteroatomen substituierter) Organylrest ist,
mit der Maßgabe, dass Verbindungen mit der Struktur **III** 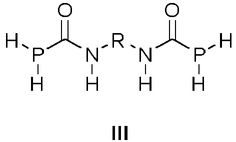
und R = Ethylen oder R= 1,2-Cyclohexylen ausgeschlossen sind.

2. Organische Phosphorverbindungen gemäß Anspruch 1, **dadurch gekennzeichnet, dass** es sich bei den Isocyanat-reaktiven Gruppen der Verbindungen **PCA** um mindestens zwei Gruppen ausgewählt aus der Gruppe bestehend aus -PH₂, -PHR, -P(O)H₂, -P(O)HR, -P(O)(H)OH, -P(OH)H, -P(OH)R (mit R = gegebenenfalls mit Heteroatomen substituierter Organylrest), -OH, -NH₂, -NHR` (mit R' = gegebenenfalls mit Heteroatomen substituierter Organylrest ausgenommen para-substituierter Anilinrest), - SH und Oxiran handelt.

3. Organische Phosphorverbindungen gemäß Anspruch 1 oder 2, **dadurch gekennzeichnet, dass** m = 0 oder 1 und n = 1 oder 2 sind, wobei jeweils gilt, dass m+n = 2 ist, und
R ausgewählt aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische ist, und
X = OH ist.

4. Verfahren zur Herstellung von organischen Phosphorverbindungen gemäß Anspruch 1 bis 3, **dadurch gekennzeichnet, dass** roter Phosphor, Natrium, organische Carbonate, tert-Butanol, Amine in Gegenwart einer Brönsted-Säure und optional einem Oxidationsmittel in einer Eintopfreaktion miteinander umgesetzt werden.

5. Verfahren zur Herstellung von organischen Phosphorverbindungen **PCA,** welche eine der Strukturen **VI** oder **VII** aufweisen 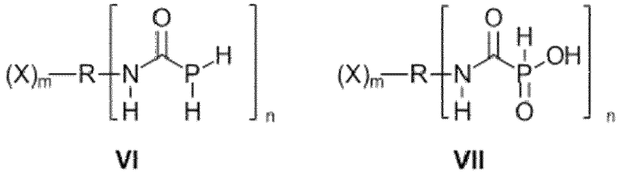
wobei X eine NCO-reaktive Gruppe,
m = 0, 1, 2 oder 3,
n = 1, 2, 3 oder 4 und
m+n≥2
und R ein (gegebenenfalls mit Heteroatomen substituierter) Organylrest ist,
umfassend die Schritte
(i) ausgehend von elementarem Phosphor, elementarem Natrium, tert-Butanol (tBuOH), Naphthalin und organischen Carbonaten in einem Lösungsmittel Herstellung einer 1,4-Dioxanfreien, lagerstabilen Na(OCP)-Reaktionslösung, und
(ii) diese in einem weiteren Schritt mit einem Amin oder dem Hydrochlorid eines Amines in Anwesenheit einer geeigneten Brönsted Säure umgesetzt wird, und
(iii) optional Oxidation mit einem Oxidationsmittel.

6. Verfahren gemäß Anspruch 5 umfassend in oder nach Schritt (i) die Quantifizierung des OCP-Anion-Gehaltes in der Na(OCP)-Lösung mittels IR-Spektroskopie.

7. Verfahren zur Herstellung von isocyanat-terminierten Verbindungen durch Umsetzung von einer organischen Phosphorverbindung gemäß einem der Ansprüche 1 bis 3mit einem molaren Überschuss mindestens eines Di- oder Polyisocyanats, wobei dieser nach Reaktion entweder als Reaktivverdünner in der Produktmischung verbleiben oder abdestilliert werden kann.

8. Isocyanat-terminierte Verbindungen erhältlich gemäß einem Verfahren gemäß Anspruch 7.

9. Isocyanat-terminierte Verbindungen, aufweisend eine der Strukturen **VIII, IX, X:** 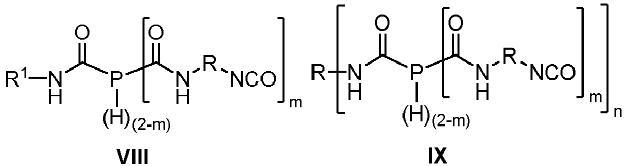 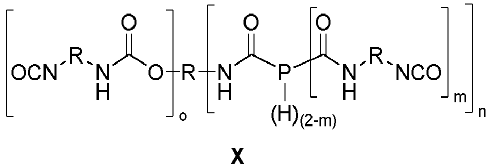 mit
m = 1, 2; n = 2-4; o = 1-3;
R¹ = ein (gegebenfalls Heteroatom substituierten) Organylrest, und bevorzugt ausgewählt aus der Gruppe bestehend aus den Substituenten Wasserstoff, Methyl, Ethyl, Butyl, Propyl, Pentyl, Hexyl, Heptyl, Oxtyl, Phenyl, Tolyl, Cyclohexyl und Cyclopentyl; und
R = unabhängig voneinander ausgewählte (gegebenenfalls mit Heteroatomen substituierte) Organylresten, und sind bevorzugt ausgewählt aus der Gruppe bestehend aus den Substituenten Methylen, Dimethylen, Trimethylen, Tetramethylen, Pentamethylen, Hexamethylen, Heptamethylen, Octamethylen, Nonamethylen, Decamethylen, Undecamethylen, Dodecamethylen gegebenenfalls Heteroatom-enthaltende Cyclohexylen, Phenylen, Diphenylen, Dimethylphenylen, 2-Methylpentamethylen, 2,2,4-Trimethylhexamethylen, Dodecamethylen, 1,2-Cyclohexylen, 1,3-Cyclohexylen, 1,4-Cyclohexylen, 5-(1-Methylen-(1,3,3-trimethylcyclohexan)), alle Regioisomere des Methylenbiscyclohexylens, alle Regioisomere des Methylenbisphenylens, Methylenbis-(3,3'-dimethylcyclohexan-1,4-diyl), Propan-2,2-diyl)bis(cyclohexan-4,1-diyl), Propane-2,2-diyl-bis-4,1-phenylen, Polyhexamethylen, Tolylen, Poly(propylenglycol)tolylen, Poly(ethylenadipate)Tolylen, 2,4,6-Trimethyl-1,3-phenylen, 4-Chloro-6-methyl-1,3-phenylen, Poly[1,4-phenylen], co-[Poly(1,4-butanediol)], Poly(tetrafluoroethylenoxid-co-difluoromethylenoxid), 1,3-Bis(1-methylethyl)benzen, 3,3' -Dimethyl-4,4' -biphenylen, Naphthalen, 1,2-Phenylen, 1,3-Phenylen, 1,4-Phenylen, 2,4- oder 2,5- oder 2,6- Tolylen sowie deren Isomerengemische, Methylen-4,4'- oder 2,4'- oder 2,2'- Bisphenylen sowie deren Isomerengemische, 4,4'-, 2,4'- oder 2,2'- 2,2'-Diphenylpropane-p-xylylen und α,α,α',α'-Tetramethyl- m- oder -p-xylylen; ganz besonders bevorzugt ist R ausgewählt aus der Gruppe bestehend aus Trimethylen, Tetramethylen, Pentamethylen, Hexamethylen, Methylen-4,4'- oder 2,4'- oder 2,2'- Bisphenylen sowie deren Isomerengemische,
oder eine der Strukturen der zu **VIII, IX** bzw. **X** äquivalenten Verbindungen mit oxidiertem Phosphor.

10. Verwendung von Phosphanylcarboxamiden und Phosphor(III)säurecarboxamiden gemäß einem der Ansprüche 1 bis 3 als Monomer für die Herstellung von Polymeren, insbesondere für Polymere mit einem Phosphorgehalt > 1 %.

11. Verfahren zur Herstellung von Polymeren, bevorzugt von Polyurethan (PUR) oder von Polyurethan / Polyisocyanurat (PUR/PIR), besonders bevorzugt von PUR/PIR - Hartschaum, durch Umsetzung von Isocyanat-terminierten Verbindungen gemäß einem der Ansprüche 8 und 9 mit Isocyanat-reaktiven Verbindungen, z.B. Polyolen.

12. Verfahren gemäß Anspruch 11, **dadurch gekennzeichnet, dass** die Umsetzung in Gegenwart von Di- und / oder Polyisocyanaten durchgeführt wird.

13. Polymere erhältlich unter Verwendung von Phosphanylcarboxamiden und Phosphor(III)säurecarboxamiden gemäß einem der Ansprüche 1 - 4 und / oder von Isocyanat-terminierten Verbindungen gemäß Anspruch 8 oder 9.

14. Polymer gemäß Anspruch 12, **dadurch gekennzeichnet, dass** es sich um ein Polyurethan (PUR) oder ein Polyurethan / Polyisocyanurat (PUR/PIR) handelt, insbesondere um einen PUR/PIR - Hartschaum.

15. Verwendung einer Verbindung gemäß einem der Ansprüche 1 bis 4, 8 und 9 und / oder ein Polymer gemäß einem der Ansprüche 13 - 14 als Flammschutz - Additiv.
